(19) Europäisches Patentamt
European Patent Office
Office européen des brevets

(11) EP 2 816 339 A1

(12) EUROPEAN PATENT APPLICATION

(43) Date of publication:
24.12.2014 Bulletin 2014/52

(51) Int Cl.:
G01M 99/00 (2011.01)

(21) Application number: 14173037.4

(22) Date of filing: 18.06.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 20.06.2013 JP 2013129150

(71) Applicant: Mitsubishi Hitachi Power Systems, Ltd.
Yokohama-shi, Kanagawa 220-8401 (JP)

(72) Inventors:
• Arai, Masahiko
Yokohama-shi, Kanagawa 220-8401 (JP)

• Doi, Hiroyuki
Yokohama-shi, Kanagawa 220-8401 (JP)
• Kobayashi, Shinichi
Yokohama-shi, Kanagawa 220-8401 (JP)
• Murata, Kenichi
Yokohama-shi, Kanagawa 220-8401 (JP)

(74) Representative: MERH-IP
Matias Erny Reichl Hoffmann
Paul-Heyse-Strasse 29
80336 München (DE)

(54) **Remaining life assessment method for heat-resisting steel member**

(57) A remaining life assessment method for a heat-resisting steel member to be used under a high temperature includes the steps of: determining a hardness of each of a simply heated material and a damaged portion from creep rupture tests and creep interruption tests of a heat-resisting steel material constituting the heat-resisting steel member under conditions of various heating temperatures, loaded stresses and heating periods (S501), calculating a damage rate and a time-temperature parameter (S502), and obtaining a relationship between the hardness of each of the simply heated material and the damaged portion, and the damage rate or the time temperature parameter (S503); calculating a difference between the hardness of the simply heated material and the hardness of the damaged portion, and obtaining a relationship between the difference and the damage rate (S504); measuring an initial hardness in an unused state of the heat-resisting steel member to be assembled into an actual machine (S505); calculating an initial value of the time-temperature parameter corresponding to the initial hardness (S506); calculating an equivalent parameter of the actual machine (S507); and calculating the damage rate by some prescribed calculations (S511).

FIG. 5

DETERMINE HARDNESS OF EACH OF A SIMPLY HEATED MATERIAL AND A DAMAGED PORTION FROM CREEP RUPTURE TESTS AND CREEP INTERRUPTION TESTS UNDER CONDITIONS OF VARIOUS HEATING TEMPERATURES AND VARIOUS HEATING PERIODS — S501

CALCULATE A DAMAGE RATE ($\phi_c$) AND A TIME–TEMPERATURE PARAMETER (P) — S502

CREATE A GRAPH SHOWING A RELATIONSHIP BETWEEN THE HARDNESS OF EACH OF THE SIMPLY HEATED MATERIAL AND THE DAMAGED PORTION AND THE DAMAGE RATE OR THE TIME–TEMPERATURE PARAMETER — S503

CALCULATE A DIFFERENCE ($\Delta H$) BETWEEN THE HARDNESS OF THE SIMPLY HEATED MATERIAL AND THE HARDNESS OF THE DAMAGED PORTION, AND OBTAIN A RELATIONSHIP BETWEEN ($\Delta H$) AND THE DAMAGE RATE ($\phi_c$) (MASTER DIAGRAM) — S504

MEASURE INITIAL HARDNESS ($H_0$) IN AN UNUSED STATE OF THE HEAT-RESISTING STEEL MEMBER TO BE ASSEMBLED IN AN ACTUAL MACHINE — S505

CALCULATE AN INITIAL VALUE ($P_0$) OF THE TIME–TEMPERATURE PARAMETER CORRESPONDING TO THE INITIAL HARDNESS ($H_0$) — S506

CALCULATE AN EQUIVALENT PARAMETER ($\Delta P$) AS AN INCREMENT OF THE TIME–TEMPERATURE PARAMETER CORRESPONDING TO OPERATING TEMPERATURE AND OPERATING TIME OF THE ACTUAL MACHINE — S507

CALCULATE AN ESTIMATED VALUE ($H_{est}$) OF HARDNESS OF THE SIMPLY HEATED MATERIAL CORRESPONDING TO THE SUM ($P(T, t-t_0)$) OF THE INITIAL VALUE ($P_0$) AND THE EQUIVALENT PARAMETER ($\Delta P$) — S508

CALCULATE HARDNESS OF THE DAMAGED PORTION CORRESPONDING TO THE SUM ($P(T, t-t_0)$) FROM THE GRAPH — S509

CALCULATE A HARDNESS DIFFERENCE ($\Delta H$) CORRESPONDING TO THE SUM ($P(T, t-t_0)$) — S510

CALCULATE THE DAMAGE RATE ($\phi_c$) CORRESPONDING TO THE HARDNESS DIFFERENCE ($\Delta H$) CORRESPONDING TO THE SUM ($P(T, t-t_0)$) FROM THAT HARDNESS DIFFERENCE ($\Delta H$) — S511

EP 2 816 339 A1

**Description**

TECHNICAL FIELD:

The present invention relates to a remaining life assessment method of a heat-resisting steel material to be used under a high temperature.

BACKGROUND ART:

A turbine is configured of a rotor shaft, a casing, a casing bolt and the like that are typically made of Cr-Mo-V low-alloy steel or 12Cr ferritic stainless steel. If this type of heat resistant steel member is stressed for a long time in a high temperature atmosphere at about 300 to 600°C, the heat resistant steel member is deteriorated due to a precipitation of carbide in grain boundaries and in crystal grains or due to a formation of voids in grain boundaries. Such deterioration causes occurrence of a crack in each of components of the turbine, which may eventually lead to a failure accident of the turbine. An accurate life assessment of the turbine component is thus important from the viewpoint of preventing such an accident or economically operating the turbine.

As one existing method of examining a damaged state of a heat resistant steel member exposed to a high temperature atmosphere for a long time, a test specimen is directly cut out from an actually used member and subjected to a breaking test. In a recent assessment method, there is conducted a nondestructive test by which a damaged state of a member can be determined while the member is set in place.

Japanese Examined Patent Application Publication No. Hei 02-54514 (Patent Document 1) discloses a life prediction method of a heat resistant steel member, in which an unknown creep strain damage rate is determined from a difference ($\Delta H$) between hardness of a metal material member used at a high temperature and hardness of the member used with no load under the same temperature and time conditions based on a relationship between known $\Delta H$ and a known creep strain damage rate, the life prediction method aiming to simply and nondestructively determine a life reduction level of the metal material member to be used at the high temperature.

Japanese Unexamined Patent Application Publication No. 2008-122345 (Patent Document 2) discloses a method of determining a life of a high-strength steel weld by a creep elongation, in which measurement is conducted on the creep elongation of a heat affected zone in a predetermined area including a high-strength steel weld to be examined, and a creep strain is determined through comparison between results of the measurement and length of the predetermined area including the high-strength steel weld in an initial state of operation, and the determined value of the creep strain is applied to a beforehand obtained creep strain characteristic curve indicating a relationship between operation time or specific creep life consumption and creep strain, so that the specific creep life consumption of the high-strength steel weld to be examined is obtained.

SUMMARY OF THE INVENTION:

According to the present invention, there is provided a remaining life assessment method for a heat-resisting steel member to be used under a high temperature, the method including the steps of: determining a hardness of each of a simply heated material and a damaged portion from creep rupture tests and creep interruption tests of a heat-resisting steel material constituting the heat-resisting steel member under conditions of various heating temperatures, loaded stresses and heating periods, calculating a damage rate and a time-temperature parameter, and obtaining a relationship between the hardness of each of the simply heated material and the damaged portion, and the damage rate or the time temperature parameter; calculating a difference between the hardness of the simply heated material and the hardness of the damaged portion, and obtaining a relationship between the difference and the damage rate; measuring an initial hardness in an unused state of the heat-resisting steel member to be assembled into an actual machine; calculating an initial value of the time-temperature parameter corresponding to the initial hardness; calculating an equivalent parameter as an increment of the time-temperature parameter corresponding to an operating temperature and an operating time of the actual machine; calculating an estimated value of the hardness of the simply heatedmaterial corresponding to a sum of the initial value and the equivalent parameter; calculating the hardness of the damaged portion corresponding to the sum, and calculating the difference corresponding to the sum; and/or calculating the damage rate corresponding to the difference corresponding to the sum from the difference corresponding to the sum.

According to the assessment method of the present invention, a remaining life of a member formed of a heat-resisting steel material to be used for a turbine member can be accurately assessed. The method of the present invention contributes to a safe operation of a plant.

BRIEF DESCRIPTION OF THE DRAWINGS:

FIG. 1 is a graph illustrating a relationship between a damage rate or a time-temperature parameter and a hardness of each of a stressed and heated material and a simply heated material;
FIG. 2 is a graph illustrating a relationship between the damage rate and a hardness difference ΔH;
FIG. 3 is a graph illustrating a relationship between the time-temperature parameter and the hardness;
FIG. 4 is a graph illustrating a relationship between the damage rate and a hardness of a damaged portion; and
FIG. 5 is a flowchart illustrating an exemplary procedure of a remaining life assessment method for a heat-resisting steel member.

DETAILED DESCRIPTION OF THE PREFERRED EMBODIMENTS:

The present invention relates to a remaining life assessment method of a heat-resisting steel material to be used under a high temperature. In particular, the present invention relates to a remaining life assessment method suitable for nondestructively detecting a deteriorated state of a turbine member to be used under the high temperature, such as a turbine rotor shaft, a turbine casing, a bolt, a blade, a valve, a diaphragm, and a pipe to assess a remaining life of a heat-resisting steel material for the turbine member.

The life prediction methods described in Patent Document 1 and Patent Document 2 each have room for improvement in that prediction accuracy is still insufficient.

An obj ect of the present invention is to provide a remaining life assessment method with improved accuracy for a high-temperature heat-resisting steel member, the method being applicable to a heat-resisting material member to be used under the high temperature.

The present inventor has noticed that a relationship between a difference in a decreased amount of a hardness depending on presence or absence of a stress and a damaged level of a heat-resisting material member is effectively combined with a determination of a material damage since the heat-resisting material member to be used under a high temperature is decreased in the hardness due to a tempered effect caused by a high-temperature operation and a creep damage caused by a stress loading. The present inventor has further noticed that it is more important for determining a hardness difference ΔH to estimate hardness of a simply heated portion (unstressed at high temperature) than to determine hardness of a damaged portion (stressed at high temperature) which can be determined through measuring hardness of a material for an actual machine, and has found a new method of assessing a remaining life of a heat-resisting steel member to be used under the high temperature.

The present invention is summarized as follows.

(1) A remaining life assessment method for a heat-resisting steel member to be used under a high temperature, the method including: a step of performing creep tests of a heat-resisting steel material constituting a heat-resisting steel member to be assessed to obtain a time-temperature parameter determined from a lifetime and a creep test temperature and obtain a hardness of a damaged portion; a step of obtaining a time-temperature parameter and a hardness of a simply heated material from a heating temperature and a heating time; a step of creating a life assessment diagram by plotting a damage rate and a hardness difference; and a step of assessing the remaining life of the heat-resisting steel member using a master diagram of the hardness difference and the damage rate.
(2) The method according to (1), in which the hardness estimated in consideration of operating a temperature of an actual machine is determined from an initial hardness of the heat-resisting steel member to be assessed, and a master diagram of the time-temperature parameter and the hardness of the simply heated material.
(3) The method according to (1) or (2), in which the heat-resisting steel member to be used under the high temperature is a turbine member to be used under the high temperature, such as one of a turbine rotor shaft, a turbine casing, a bolt, a blade, a valve, a diaphragm, and a pipe.
(4) The method according to any one of (1) to (3), in which the heat-resisting steel material is a ferritic cast-and-forged steel containing 8 to 13 mass% Cr.
(5) The method according to any one of (1) to (3), in which the heat-resisting steel material is a ferritic cast-and-forged steel containing 1 to 3 mass% Cr.

The remaining life assessment method of the present invention assesses a heat-resisting steel material to be used under the high temperature. Here, "high temperature" means a temperature equal to or higher than a creep start temperature of a metal material, the creep start temperature being typically defined to be $0.4T_m$ ($T_m$: melting point of the metal).

The assessment method of the present invention is suitable for remaining life assessment of a high-temperature steel member to be used at the most severe temperature condition of a steam turbine, i.e., at a high temperature of 300°C or more, for example, as high as 600°C or more. In this specification, "a heat-resisting steel member" includes a turbine rotor shaft, a turbine casing, a bolt, a blade, a valve, a diaphragm, and a pipe.

The heat-resisting steel member to be assessed in the present invention is a member to be used under the high temperature for a long time, for example, a member used for pipes or casings in various chemical plants. Among the turbine members, a member subjected to operation at a temperature of 500°C or more, particularly 600°C or more, is exposed to a high temperature atmosphere, and is therefore particularly easily deteriorated. In addition, such a member is highly likely to cause a serious accident due to breakage. The assessment method of the present invention is suitable for accurately assessing the remaining life of such a turbine member. In this specification, the turbine includes a steam turbine, a gas turbine, and other turbines operated at high temperature.

The remaining life assessment method of the present invention is a method of assessing a remaining life of a heat-resisting steel member to be used under the high temperature, the method including: a step of performing creep tests of a heat-resisting steel material constituting a heat-resisting steel member to be assessed to obtain a time-temperature parameter determined from a lifetime and a creep test temperature and obtain a hardness of a damaged portion; a step of obtaining a time-temperature parameter and a hardness of a simply heated material from a heating temperature and a heating time; a step of creating a life assessment diagram by plotting a damage rate and a hardness difference; and a step of assessing the remaining life of the heat-resisting steel member using the master diagram of the hardness difference and the damage rate.

The creep test of the heat-resisting steel material can be performed using a round-bar specimen with collar having a parallel-part diameter of 6 mm or 10 mm according to a typical method known to those skilled in the art, for example, JIS Z 2271 (Metallic materials-Uniaxial creep testing in tension-Method of test). A plurality of creep tests are performed at various stress levels and/or test temperatures. Hardness of the damaged portion is determined through measuring hardness of a cross section of a parallel part of the creep test specimen. The damage rate $\varphi_c$ is represented by the following Equation (1) based on rupture time ($t_r$) and interrupting time (t) before rupture.

$$\varphi_c = t/t_r \quad \dots (1)$$

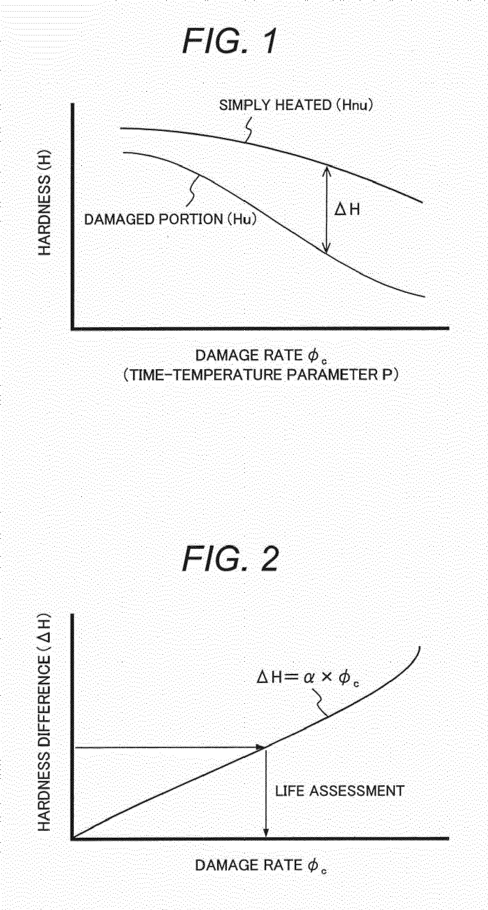

FIG. 1 illustrates a relationship between a damage rate $\varphi_c$ or a time-temperature parameter P and a hardness (Hu) of a damaged portion as well as a hardness (Hnu) of a simply heated portion.

In FIG. 1, Hnu indicates variation of hardness of the unstressed member corresponding to a member subjected to tempering. On the other hand, Hu indicates variation of hardness of the stressed member. When the abscissa represents time, Hu depends on stress, and a curve is given for each of temperatures or stress levels. When the abscissa represents the time-temperature parameter P or the damage rate $\varphi_c$, a curve is independent of temperature and a stress level. In other words, a relationship between $\varphi_c$ and Hu is represented by a single curve.

As illustrated in FIG. 1, a difference between Hnu and Hu at the same abscissa value is referred to as ∆H.

FIG. 2 illustrates a relationship between the hardness difference ∆H and the damage rate $\varphi_c$ by a low-order approximate expression (linear approximation is desirable as much as possible). This graph is referred to as "a master diagram".

As illustrated in FIG. 2, the relationship between ∆H and the damage rate $\varphi_c$ is a proportionate relationship (the proportionality constant is denoted as $\alpha$) in a region where $\varphi_c$ is equal to or less than a predetermined value.

According to FIG. 2, the life of the heat-resisting steel material can be assessed since $\varphi_c$ can be determined from ∆H.

In the present invention, the time-temperature parameter refers to a parameter (P) typically used for estimating a long-time behavior based on a short-time test results in estimation of a creep rupture time. The major time-temperature parameters include the Orr-Sherby-Dorn parameter, the Larson-Miller parameter, and the Manson-Haferd parameter.

The time-temperature parameter can be appropriately selected in accordance with the heat-resisting steel material to be assessed such that when the parameter is plotted against testing stress, the parameter can be approximated by a predetermined function (preferably, a linear function). For example, the Larson-Miller parameter represented by the following Equation (2) can be preferably used for the assessment method of the present invention.

$$P = (\log(t) + C) \times T \quad \dots (2)$$

where t is time, C is a parameter constant, and T is a creep test temperature.

The Larson-Miller parameter is particularly preferred for a heat-resisting steel material formed of a ferritic cast-and-forged steel.

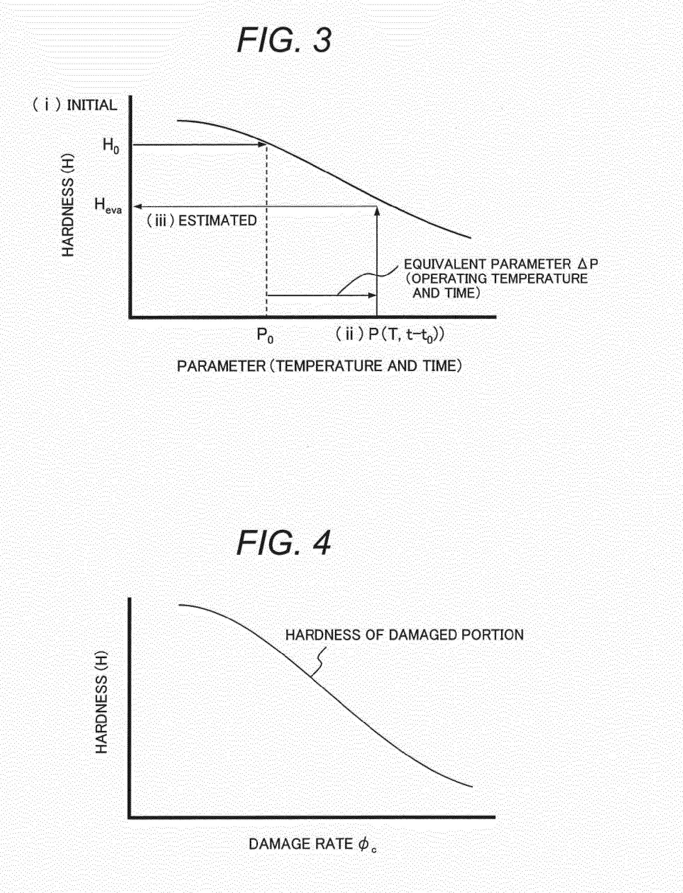

FIG. 3 shows a curve drawn as follows: a heating time-heating temperature parameter (Larson-Miller parameter) is plotted against the hardness H. In FIG. 3, a function approximating the plotted points is determined, and a curve of the function is drawn.

In an estimation of the hardness of a simply heated material in consideration of an initial hardness (an initial hardness in an unused state of the heat-resisting steel material to be assembled in an actual machine), which is one characterizing point of the present invention, (i) by assuming that the simple heating is equivalent to an additional tempering from $P_0$ in FIG. 3 corresponding to initial hardness $H_0$, an equivalent parameter $P_{eq}$ ($T_{eq}$, $t_{eq}$) obtained from the above Equation (2) is added to $P_0$, and (ii) a parameter P ($T_{eq}$, $t_0+t_{eq}$) is determined, and (iii) the estimated hardness $H_{eva}$ (an estimated value of the hardness of the simply heated material) is obtained from the parameter value P ($T_{eq}$, $t_0+t_{eq}$). Here, to represents time corresponding to $T_{eq}$ or $P_0$.

If the hardness is estimated from an unambiguous master diagram obtained from a parameter value exclusively including operating time and heating temperature without considering the initial hardness, a hardness lower than an actual hardness is determined in the case of a high initial hardness, and the hardness difference ΔH becomes smaller, resulting in the remaining life assessment on a dangerous side (i.e., resulting in a relatively longer remaining life assessed). When a line of remaining life assessment is experimentally obtained for each heat-resisting steel material, the remaining life of a heat-resisting steel member can be easily assessed based on the estimated hardness determined in consideration of the initial hardness.

The hardness H to be used for the remaining life assessment of the heat-resisting steel member can be determined through a measurement of a member to be assessed, for example, at a periodic inspection of a chemical plant or a turbine in a shutdown state.

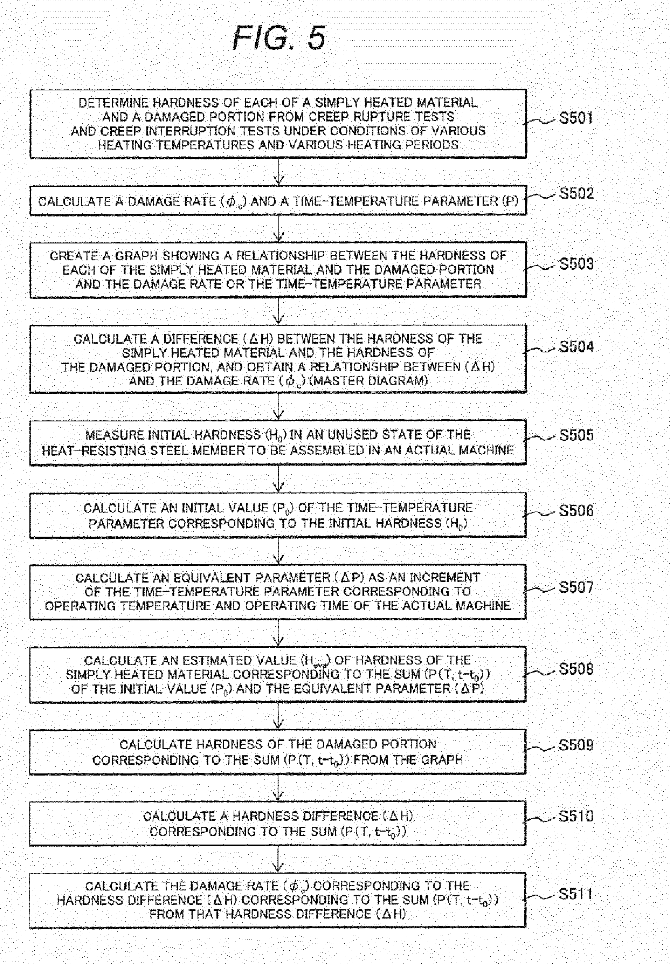

FIG. 5 is a flowchart collectively illustrating a procedure of the remaining life assessment method for the heat-resisting steel member.

In FIG. 5, first, hardness of each of a simply heated material and a damaged portion is determined from the creep rupture tests and the creep interruption tests under conditions of various heating temperatures and various heating periods (S501). The damage rate ($\varphi_c$) and the time-temperature parameter (P) are calculated using results of such determination (S502). The graph (FIG. 1) is created (S503), showing the relationship between the hardness of each of the simply heated material and the damaged portion and the damage rate or the time-temperature parameter.

The difference (ΔH) between the hardness of the simply heated material and the hardness of the damaged portion is calculated, and the master diagram (FIG. 2) showing the relationship between that difference (ΔH) and the damage rate ($\varphi_c$) is created (S504).

The initial hardness ($H_0$) in an unused state of the heat-resisting steel member to be assembled in an actual machine is measured (S505).

The initial value ($P_0$) of the time-temperature parameter corresponding to the initial hardness ($H_0$) is calculated (S506). An equivalent parameter (ΔP) as an increment of the time-temperature parameter corresponding to an operating temperature (T) and an operating time (t) of the actual machine is calculated (S507). An estimated value ($H_{eva}$) of the hardness of the simply heated material corresponding to a sum ($P(T_{eq}$, $t_0+t_{eq})$) of the initial value ($P_0$) and the equivalent parameter (ΔP) is calculated (S508). The procedure of steps S506 to S508 is shown in FIG. 3.

The hardness of the damaged portion corresponding to the sum ($P(T_{eq}$, $t_0+t_{eq})$) is calculated from the graph (S509). The hardness difference (ΔH) corresponding to the sum (P ($T_{eq}$, $t_0+t_{eq}$)) is calculated (S510). The damage rate ($\varphi_c$) corresponding to the hardness difference (ΔH) corresponding to the sum ($P(T_{eq}$, $t_0+t_{eq})$) is calculated from that hardness difference (ΔH) (S511). The calculation of step S511 is performed using FIG. 2.

Although the procedure of FIG. 5 shows a desirable example embodiment of the present invention, the present invention is not limited thereto, and the graph and/or the master diagram may not be used. In other words, the present invention can be carried out by sequentially performing numerical calculations without the diagrams. For the numerical calculations, a program may be created and executed by a computer. The program can be recorded in a computer-readable recording medium.

Any heat-resisting steel material may be assessed by the assessment method of the present invention without limitation. The assessment method is applicable to CrMo or CrMoV cast-and-forged steel containing 1 to 3 mass% Cr, or high-Cr cast-and-forged steel containing 8 to 13 mass% Cr. Preferred examples of the heat-resisting steel material to be used under a high temperature include a ferritic cast-and-forged steel that contains : 0.05 to 0.20 mass% (preferably 0.09 to 0.15 mass%) C; 0.2 mass% or less (preferably 0.15 mass% or less) Si; 0.01 to 1.5 mass% (preferably 0.1 to 0.7 mass%, and more preferably 0.35 to 0.65 mass%) Mn; 0.005 to 0.60 mass% (preferably 0.01 to 0.50 mass%, and more preferably 0.1 to 0.4 mass%) Ni; 8.0 to 13.0 mass% (preferably 9.0 to 12.0 mass%) Cr; 0.05 to 2.0 mass% (preferably 0.05 to 1.5 mass%) Mo; 0.2 to 5.0 mass% (preferably 0.3 to 3.0 mass%) W; 0.05 to 0.30 mass% (preferably 0.15 to 0.30 mass%) V; 0.01 to 0.20 mass% (preferably 0.04 to 0.15 mass%) Nb and/or 0.01 to 0.20 mass% (preferably 0.04 to 0.15 mass%) Ta (at least one of Nb and Ta); 3 mass% or less Co; 0.01 to 0.1 mass% (preferably 0.01 to 0.04 mass%) N; 0.0001 to 0.030 mass% (preferably 0.005 to 0.025 mass%) B; and 0.0005 to 0.04 mass% Al.

C is an indispensable element that ensures hardenability and increases a high-temperature strength through

precipitation of $M_{23}C_6$-type carbide during tempering. Thus, at least 0.05 mass% C is necessary. However, if the C content exceeds 0.20 mass%, an excessive amount of the $M_{23}C_6$-type carbide precipitates, which lowers matrix strength, and impairs a long-time high-temperature strength. Consequently, the C content is preferably 0.05 to 0.20 mass%. More preferably, the C content is 0.09 to 0.15 mass%.

Si promotes formation of a Laves phase, and lowers ductility through a grain boundary segregation of the Laves phase, etc. Hence, the Si content is preferably limited to 0.20 mass% or less, more preferably 0.15 mass% or less. However, when Si is added as a deoxidizer in an extremely small amount, but 0.01 mass% or more, excellent high-temperature characteristics are provided in conjunction with Al deoxidization described later.

Mn is an element that suppresses formation of δ-ferrite and promotes precipitation of the $M_{23}C_6$-type carbide. Thus, at least 0.01 mass% Mn is necessary. However, if the Mn content exceeds 1.5 mass%, an oxidation resistance is worsened. Consequently, the Mn content is preferably 0.01 to 1.5 mass%, more preferably 0.1 to 0.7 mass%, and most preferably 0.35 to 0.65 mass%.

Ni is an element that suppresses formation of δ-ferrite and increases toughness. Thus, at least 0.005 mass% Ni is necessary. However, if the Ni content exceeds 0. 60 mass%, the high-temperature strength is lowered. Consequently, the Ni content is preferably 0.005 to 0.60 mass%, more preferably 0.01 to 0.50 mass%, and most preferably 0.1 to 0.50 mass%.

Cr is an element necessary for improving the oxidation resistance, and increasing the high-temperature strength through precipitation of the $M_{23}C_6$-type carbide. Thus, at least 8.0 mass% Cr is necessary. However, if the Cr content exceeds 13.0 mass%, δ-ferrite is formed, and the high-temperature strength and toughness are lowered. Consequently, the Cr content is preferably 8.0 to 13.0 mass%. More preferably, the Cr content is 9.0 to 12.0 mass%.

Mo promotes fine precipitation of the $M_{23}C_6$-type carbide and thus hinders aggregation of the $M_{23}C_6$-type carbide. Mn is therefore effective for maintaining the high-temperature strength for a long time. Thus, at least 0.05 mass% Mo is necessary. However, if the Mo content exceeds 2.0 mass%, δ-ferrite is easily formed. Consequently, the Mo content is preferably 0.05 to 2. mass%. More preferably, the Mo content is 0.05 to 1.5 mass%.

W suppresses aggregation and coarsening of the $M_{23}C_6$-type carbide more strongly than Mo, and is effective for increasing the high-temperature strength through solution strengthening of a matrix. Thus, at least 0.2 mass% W is necessary. However, if the W content exceeds 5.0 mass%, δ-ferrite and a Laves phase are easily formed, and the high-temperature strength is rather lowered. Hence, the W content is preferably 0.2 to 5.0 mass%. More preferably, the W content is 0.3 to 3.0 mass%.

V is effective for increasing the high-temperature strength through precipitation of its carbonitride. Thus, at least 0.05 mass% V is necessary. However, if the V content exceeds 0.30 mass%, an excessive amount of carbon is fixed, so that a decreased amount of the $M_{23}C_6$-type carbide is precipitated, and the high-temperature strength is rather lowered. Consequently, the V content is preferably 0.05 to 0.30 mass%. More preferably, the V content is 0.15 to 0.30 mass%.

Nb and Ta help to refine crystal grains through formation of NbC and TaC. In addition, Nb and Ta are partially solid-solved during quenching and are precipitated as NbC and TaC during tempering, and thus increase the high-temperature strength. Hence, Nb and Ta are necessary to be contained at least 0.01 mass% in total. However, if the total content of Nb and Ta exceeds 0.20 mass%, an excessive amount of carbon is fixed, so that a decreased amount of the $M_{23}C_6$-type carbide is precipitated, and the high-temperature strength is lowered as with V. Consequently, the total content of Nb and Ta is preferably 0.01 to 0.20 mass%. More preferably, the content is 0.04 to 0.15 mass%.

Co suppresses formation of δ-ferrite, and increases the high-temperature strength through solution strengthening. However, since Co is an expensive element, it is preferably contained up to about 3 mass%. If the heat-resisting steel material is used at 600°C or more, Co is effectively contained 1.0 mass% or more.

N precipitates as nitride of V, and provides an IS effect (an interaction between an interstitial solid solution element and a substitutional solid solution element) in cooperation with Mo and W while being solid-solved, and thus increases the high-temperature strength. Hence, at least 0.01 mass% N is necessary. However, if the N content exceeds 0.1 mass%, ductility is lowered. Consequently, the N content is preferably 0.01 to 0.1 mass%. More preferably, the N content is 0.01 to 0.04 mass%.

B has a function of a grain boundary strengthening and a function of hindering aggregation and coarsening of the $M_{23}C_6$-type carbide while being solid-solved in the $M_{23}C_6$-type carbide, and therethrough increases the high-temperature strength. Thus, B is effectively added at least 0.0001 mass%. However, if the B content exceeds 0.030 mass%, ductility is lowered and forgeability is impaired. Consequently, the B content is preferably 0.0001 to 0.030 mass%. More preferably, the B content is 0.0005 to 0.025 mass%.

Al is preferably added 0.0005 mass% or more as a deoxidizer and a grain refinement agent. However, Al is a strong nitride formation element, and fixes certain nitrogen that effectively contributes to a high creep strength. Hence, if the Al content is high, particularly more than 0. 040 mass%, the long-time creep strength may be lowered. Hence, the Al content is preferably up to 0.040 mass%. More preferably, the Al content is 0.001 to 0.030 mass%.

Although the present invention is now described with an example, the present invention is not limited thereto.

[Example]

1. Creation of Life Assessment Diagram

First, a heat-resisting steel material was subjected to creep tests, and a graph was then created based on results of creep rupture tests and creep interruption tests, the graph showing a relationship between the damage rate $\varphi_c$ obtained by the above Equation (1) and the hardness H. The heat-resisting steel material has a chemical composition as shown in Table 1.

Table 1

| C | Si | Mn | P | S | Ni | Cr | W | Mo | V | Nb | Co | Al | N | B |
|---|---|---|---|---|---|---|---|---|---|---|---|---|---|---|
| 0.1 | 0.04 | 0.5 | 0.005 | 0.004 | 0.5 | 10.5 | 2.5 | 0.2 | 0.2 | 0.1 | 2.5 | 0.01 | 0.02 | 0.01 |
| (by mass percent) | | | | | | | | | | | | | | |

Raw materials were melted by an electroslag remelting process, and a sample was fabricated by hot forging. The sample was quenched (1100°C×1hr, oil cooling) and then tempered (700°C×4hr, air cooling). A plurality of creep test specimens were taken from the sample.

FIG. 4 illustrates a relationship between the hardness of the damaged portion (damaged portion hardness) and the damage rate determined from the creep rupture tests and the creep interruption tests.

Subsequently, the test specimens were simply heated for various holding periods at an atmosphere of 570°C, 600°C, 625°C, or 650°C to create FIG. 3 illustrating the relationship between the time-temperature parameter and the hardness of the simply heated material.

The hardness difference $\Delta H$ at a corresponding parameter was determined from FIGs. 3 and 4, and a life assessment diagram was created (FIG. 2) which shows the relationship between the damage rate and the hardness difference $\Delta H$.

2. Evaluation of Heat-Resisting Steel Member Using Life Assessment Diagram

The estimated hardness $H_{eva}$ corresponding to a use condition in the case of the initial hardness $H_0$ was calculated using FIG. 3 in the following manner.

First, the parameter $P_0$ corresponding to $H_0$ was obtained (i). Subsequently, the equivalent parameter calculated by the above Equation (2) was added to $P_0$ to calculate the parameter value $P(T_{eq}, t_0+t_{eq})$ (ii). The estimated hardness $H_{eva}$ was determined from the parameter value $P(T_{eq}, t_0+t_{eq})$ (iii).

Subsequently, the hardness Hu of the damaged portion of the actual machine was measured. The hardness difference $\Delta H$ was obtained from Hu and $H_{eva}$, and the remaining life assessment of the heat-resisting steel member was performed using the life assessment diagram of FIG. 2.

As a result, the damage rate was assessed to be about 40%, i.e., the life was assessed to be not ended.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

**Claims**

1. A remaining life assessment method for a heat-resisting steel member to be used under a high temperature, the method comprising the steps of:

   determining a hardness of each of a simply heated material and a damaged portion from creep rupture tests and creep interruption tests of a heat-resisting steel material constituting the heat-resisting steel member under conditions of various heating temperatures, loaded stresses and heating periods, calculating a damage rate and a time-temperature parameter, and obtaining a relationship between the hardness of each of the simply heated material and the damaged portion, and the damage rate or the time temperature parameter;
   calculating a difference between the hardness of the simply heated material and the hardness of the damaged portion, and obtaining a relationship between the difference and the damage rate;
   measuring an initial hardness in an unused state of the heat-resisting steel member to be assembled into an actual machine;

calculating an initial value of the time-temperature parameter corresponding to the initial hardness;

calculating an equivalent parameter as an increment of the time-temperature parameter corresponding to an operating temperature and an operating time of the actual machine;

calculating an estimated value of the hardness of the simply heated material corresponding to a sum of the initial value and the equivalent parameter;

calculating the hardness of the damaged portion corresponding to the sum, and calculating the difference corresponding to the sum; and

calculating the damage rate corresponding to the difference corresponding to the sum from the difference corresponding to the sum.

2. The method according to claim 1,
   wherein the heat-resisting steel member is one of a turbine rotor shaft, a turbine casing, a bolt, a blade, a valve, a diaphragm and a pipe.

3. The method according to claim 1 or 2,
   wherein the heat-resisting steel material is a ferritic cast-and-forged steel containing 8 to 13 mass% Cr.

4. The method according to claim 1 or 2,
   wherein the heat-resisting steel material is a ferritic cast-and-forged steel containing 1 to 3 mass% Cr.

# FIG. 1

SIMPLY HEATED (Hnu)

HARDNESS (H)

DAMAGED PORTION (Hu)

$\Delta H$

DAMAGE RATE $\phi_c$
(TIME-TEMPERATURE PARAMETER P)

# FIG. 2

HARDNESS DIFFERENCE ($\Delta H$)

$\Delta H = \alpha \times \phi_c$

LIFE ASSESSMENT

DAMAGE RATE $\phi_c$

# FIG. 3

( i ) INITIAL

$H_0$

$H_{eva}$

( iii ) ESTIMATED

HARDNESS (H)

EQUIVALENT PARAMETER $\Delta P$
(OPERATING TEMPERATURE
AND TIME)

$P_0$ ( ii ) $P(T, t{-}t_0)$

PARAMETER (TEMPERATURE AND TIME)

# FIG. 4

HARDNESS (H)

HARDNESS OF DAMAGED PORTION

DAMAGE RATE $\phi_c$

# FIG. 5

DETERMINE HARDNESS OF EACH OF A SIMPLY HEATED MATERIAL AND A DAMAGED PORTION FROM CREEP RUPTURE TESTS AND CREEP INTERRUPTION TESTS UNDER CONDITIONS OF VARIOUS HEATING TEMPERATURES AND VARIOUS HEATING PERIODS — S501

CALCULATE A DAMAGE RATE ($\phi_c$) AND A TIME-TEMPERATURE PARAMETER (P) — S502

CREATE A GRAPH SHOWING A RELATIONSHIP BETWEEN THE HARDNESS OF EACH OF THE SIMPLY HEATED MATERIAL AND THE DAMAGED PORTION AND THE DAMAGE RATE OR THE TIME-TEMPERATURE PARAMETER — S503

CALCULATE A DIFFERENCE ($\Delta H$) BETWEEN THE HARDNESS OF THE SIMPLY HEATED MATERIAL AND THE HARDNESS OF THE DAMAGED PORTION, AND OBTAIN A RELATIONSHIP BETWEEN ($\Delta H$) AND THE DAMAGE RATE ($\phi_c$) (MASTER DIAGRAM) — S504

MEASURE INITIAL HARDNESS ($H_0$) IN AN UNUSED STATE OF THE HEAT-RESISTING STEEL MEMBER TO BE ASSEMBLED IN AN ACTUAL MACHINE — S505

CALCULATE AN INITIAL VALUE ($P_0$) OF THE TIME-TEMPERATURE PARAMETER CORRESPONDING TO THE INITIAL HARDNESS ($H_0$) — S506

CALCULATE AN EQUIVALENT PARAMETER ($\Delta P$) AS AN INCREMENT OF THE TIME-TEMPERATURE PARAMETER CORRESPONDING TO OPERATING TEMPERATURE AND OPERATING TIME OF THE ACTUAL MACHINE — S507

CALCULATE AN ESTIMATED VALUE ($H_{eva}$) OF HARDNESS OF THE SIMPLY HEATED MATERIAL CORRESPONDING TO THE SUM ($P(T, t-t_0)$) OF THE INITIAL VALUE ($P_0$) AND THE EQUIVALENT PARAMETER ($\Delta P$) — S508

CALCULATE HARDNESS OF THE DAMAGED PORTION CORRESPONDING TO THE SUM ($P(T, t-t_0)$) FROM THE GRAPH — S509

CALCULATE A HARDNESS DIFFERENCE ($\Delta H$) CORRESPONDING TO THE SUM ($P(T, t-t_0)$) — S510

CALCULATE THE DAMAGE RATE ($\phi_c$) CORRESPONDING TO THE HARDNESS DIFFERENCE ($\Delta H$) CORRESPONDING TO THE SUM ($P(T, t-t_0)$) FROM THAT HARDNESS DIFFERENCE ($\Delta H$) — S511

Europäisches
Patentamt

European
Patent Office

Office européen
des brevets

## EUROPEAN SEARCH REPORT

Application Number

EP 14 17 3037

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP H02 54514 B2 (HITACHI LTD) 21 November 1990 (1990-11-21) * abstract * ----- | 1-4 | INV. G01M99/00 |
| A | Eds A K Ray ET AL: "ISBN : 81 -87053 -73-1 Remaining We Assessment of Aged Components in Thermal Power Plants and Petrochemical Industries, Vol. 2 Creep and life assessment of engineering components in power plants and process industries", , 1 January 2008 (2008-01-01), 1 January 2008 (2008-01-01), XP055143765, Retrieved from the Internet: URL:http://eprints.nmlindia.org/2695/1/85-114.PDF [retrieved on 2014-10-01] * page 90 * ----- | 1-4 | |
| A | US 2002/013643 A1 (ISHII FUMIHARU [JP] ET AL) 31 January 2002 (2002-01-31) * the whole document * ----- | 1-4 | TECHNICAL FIELDS SEARCHED (IPC) G01M G01N |

The present search report has been drawn up for all claims

| Place of search | Date of completion of the search | Examiner |
|---|---|---|
| The Hague | 9 October 2014 | Rasmusson, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 14 17 3037

This annex lists the patent family members relating to the patent documents cited in  the above-mentioned European search report.
The members are as contained in the European Patent Office EDP file on
The European Patent Office is in no way liable for these particulars which are merely given for the purpose of information.

09-10-2014

| Patent document cited in search report | Publication date | Patent family member(s) | | Publication date |
|---|---|---|---|---|
| JP H0254514 B2 | 21-11-1990 | JP | H0254514 B2 | 21-11-1990 |
|  |  | JP | S5892952 A | 02-06-1983 |
| US 2002013643 A1 | 31-01-2002 | AU | 752024 B2 | 05-09-2002 |
|  |  | AU | 3518301 A | 18-10-2001 |
|  |  | JP | 4649497 B2 | 09-03-2011 |
|  |  | JP | 4745366 B2 | 10-08-2011 |
|  |  | JP | 2008180735 A | 07-08-2008 |
|  |  | JP | 2008249732 A | 16-10-2008 |
|  |  | US | 2002013643 A1 | 31-01-2002 |
|  |  | US | 2004107067 A1 | 03-06-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI0254514 B

- JP 2008122345 A